# EUROPEAN PATENT APPLICATION

(11) **EP 4 345 594 A1**
(43) Date of publication of application: **03.04.2024**
(21) Application number: 21955650.3
(22) Date of filing: 22.09.2021
(51) Int. Cl.: G06F 3/06

(54) **APPLICATION DOWNLOAD PROCESSING METHOD AND APPARATUS, DEVICE, AND STORAGE MEDIUM**

(30) Priority: 31.08.2021 CN 202111017294
(71) Applicant: Guangdong Genius Technology Co., Ltd., Dongguan, Guangdong 528850 (CN)
(72) Inventor: ZHANG, Weicheng, Dongguan, Guangdong 528850 (CN)
(74) Representative: Ran, Handong
(86) International application number: PCT/CN2021/119722
(87) International publication number: WO 2023/029120

(57) **Abstract**

An application download processing method and apparatus, a device, and a storage medium. The method comprises: obtaining a download link of application software, the download link being used for downloading an install pack of the application software (S110); if the network is disconnected before the install pack is completed downloading, locally caching the download link and awaiting the networking (S 120); and if market-off information is obtained after networking, canceling a download operation of the application software according to the market-off information and deleting the locally cached download link (S130). By using the technical means, the problem of memory waste caused by downloading and installing an application off the market in an existing children's telephone watch is solved.

## Description

### TECHNICAL FIELD

Embodiments of the present disclosure relate to the technical field of application software, and in particular, to an application downloading processing method, apparatus, and device, and a storage medium.

### BACKGROUND

If a user wants to download application software to a smart watch for kids, the user needs to obtain a download link of the application software from an application server and download an installation package of the application software from the download link. However, if the smart watch for kids is disconnected from a network in the downloading process and the downloading of the installation package of the application software stops, the smart watch for kids will cache the download link locally and may download the installation package again until the smart watch for kids is reconnected to the network.

In the process of waiting for network reconnection, if the application software is removed from an application server due to a defect or another reasons, the application server will no longer provide the download link of the application software. However, since the smart watch for kids has cached the download link locally when it is disconnected from the network, the smart watch for kids will automatically obtain, after it is reconnected to the network, the download link of the application software locally and continue to download and install the application software. As a result, some application software that cannot be used normally may be installed in the smart watch for kids, which occupies an internal memory of the smart watch for kids and reduces the running speed of the smart watch for kids.

### SUMMARY

The embodiments of the present disclosure provide an application downloading processing method, apparatus, and device, and a storage medium, which solve the problem of waste of an internal memory caused by downloading and installation of a removed application to the existing smart watch for kids.

In a first aspect, the present disclosure provides an application downloading processing method, including:
obtaining a download link of application software, wherein the download link is used for downloading an installation package of the application software;
if network disconnection occurs before the downloading of the installation package is completed, caching the download link locally, and waiting for network reconnection; and
if removal information is obtained after the network connection is restored, canceling a downloading operation of the application software according to the removal information, and deleting the locally cached download link.

Further, the removal information includes a list of removed applications; and
the canceling a downloading operation of the application software according to the removal information, and deleting the locally cached download includes:
if the list of removed applications contains the application software, canceling the downloading operation of the application software, and deleting the corresponding download link from a local cache.

Further, the removal information includes removal push information of the application software.

Further, the application download processing method further includes:
after the network connection is completed, re-executing the downloading operation of the application software at a corresponding time node on the basis of preset waiting time.

In a second aspect, the present disclosure provides an application downloading processing apparatus, including:
a downloading operation module, configured to obtain a download link of application software, wherein the download link is used for downloading an installation package of the application software;
a downloading network connection module, configured to: if network disconnection occurs before the downloading of the installation package is completed, cache the download link locally, and wait for network reconnection; and
a downloading canceling module, configured to: if removal information is obtained after the network connection is restored, cancel a downloading operation of the application software according to the removal information, and delete the locally cached download link.

Further, the removal information includes a list of removed applications; and
the downloading canceling module, configured to: cancel a downloading operation of the application software according to the removal information, and delete the locally cached download, includes:
a first canceling unit, configured to: if the list of removed applications contains the application software, cancel the downloading operation of the application software, and delete the corresponding download link from a local cache.

Further, the removal information includes removal push information.

Further, the application download processing apparatus further includes:
a waiting unit, configured to: after the network connection is completed, re-execute the downloading operation of the application software at a corresponding time node on the basis of preset waiting time.

In a third aspect, the present disclosure provides an application downloading processing device, including:
one or more processors;
a memory, configured to store one or more programs,
wherein the one or more programs, when executed by the one or more processors, cause the one or more processors to implement the application downloading processing method as described in the first aspect.

In a fourth aspect, the present disclosure provides a computer-readable storage medium, storing a computer program, wherein the program, when executed by a processor, implements the application downloading processing method as described in the first aspect.

The above application downloading processing method, apparatus, and device, and storage medium involves: obtaining a download link of application software, wherein the download link is used for downloading an installation package of the application software; if network disconnection occurs before the downloading of the installation package is completed, locally caching the download link, and waiting for network reconnection; and of removal information is obtained after network connection is restored, canceling the downloading operation of the application software according to the removal information, and deleting the locally cached download link. Through the above technical means, after it is detected that the application software downloaded through the locally cached download link has been removed, the downloading operation of the application software is stopped, and the locally cached download link is deleted to prevent the installation of the removed application software. This solves the problem of waste of an internal memory caused by the fact that the smart watch for kids downloads and installs, through the locally cached download link after the network connection is restored, a removed application that cannot be run normally.

### BRIEF DESCRIPTION OF THE DRAWINGS

FIG. 1 is a flowchart of an application downloading processing method according to an embodiment of the present disclosure;
FIG. 2 is a block flowchart of an application downloading processing method according to an embodiment of the present disclosure;
FIG. 3 is a block flowchart of another application downloading processing method according to an embodiment of the present disclosure;
FIG. 4 is a schematic structural diagram of an application downloading processing apparatus according to an embodiment of the present disclosure; and
FIG. 5 is a schematic structural diagram of an application downloading processing device according to an embodiment of the present disclosure.

### DETAILED DESCRIPTION OF THE EMBODIMENTS

In order to make the objectives, technical solutions, and advantages of the present disclosure clearer, the following further describes implementations of the present disclosure in detail with reference to the accompanying drawings. It can be understood that the specific embodiments described here are merely for the purpose of explaining the present disclosure but not limiting the present disclosure. In addition, it should also be noted that for convenience of description, only the portions, not all contents, relevant to the present disclosure are shown in the drawings. Before discussing the exemplary embodiments in more details, it should be mentioned that some exemplary embodiments are described as processes or methods depicted in the flowcharts. Although the flowcharts describe various operations (or steps) as sequential processing, many of the operations can be implemented in parallel, concurrently, or simultaneously. In addition, the order of the various operations can be rearranged. When the operations are completed, the processing may be terminated, but there may also be additional steps not included in the drawings. The processing can correspond to methods, functions, procedures, subroutines, subprograms, and the like.

The application downloading processing method provided in the embodiments of the present disclosure can be executed by an application downloading processing device. The application downloading processing device can be implemented through software and/or hardware. The application downloading processing device can be composed of two or more physical entities or a physical entity. For example, the application downloading processing devices include smart terminals such as a smart watch for kids. In addition, the application downloading processing devices can also be application programs run smart watch for kids.

For ease of understanding, an exemplary description is made in the embodiments to an application downloading processing device which is the smart watch for kids.

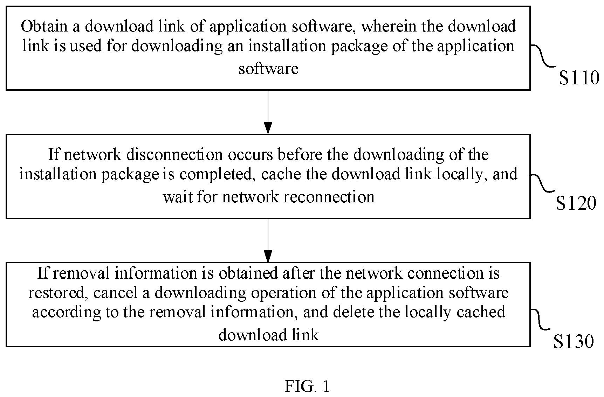

FIG. 1 is a flowchart of an application downloading processing method according to an embodiment of the present disclosure. Referring to FIG. 1, the application downloading processing method includes:
S110. A download link of application software is obtained, wherein the download link is used for downloading an installation package of the application software.

Exemplarily, if a user wants to install new application software on a smart watch for kids, the smart watch for kids sends a downloading request for the application software to a server end in a case that the smart watch for kids is connected to a network. The server end refers to a server that manages various application software download resources. Further, the server receives a downloading request from the smart watch for kids and determines identity information of the smart watch for kids and identifier information of the application software according to the downloading request. The server obtains the download link corresponding to the application software according to the identifier information of the application software, and sends the download link to the corresponding smart watch for kids according to the identity information of the smart watch for kids. After receiving the download link sent by the server, the smart watch for kids downloads an installation package of the application software from the download link. If the smart watch for kids is connected to the network normally, the installation package of the application software will be downloaded without failure and then be installed.

S120. If network disconnection occurs before the downloading of the installation package is completed, the download link is cached locally, and wait for network reconnection.

Time before the downloading of the installation package is completed refers to an entire process from obtaining the download link to the end of the downloading of the installation package. For example, if the smart watch for kids is disconnected from the network before the downloading of the installation package is completed, the smart watch for kids cannot continue to download the installation package from the download link. To ensure that the smart watch for kids can complete the downloading of the installation package subsequently after the network connection is restored, the smart watch for kids may cache the download link locally and will continue to download the partially downloaded installation package according to the locally cached download link until the smart watch for kids is connected to the network, and install the application software after the downloading is completed.

S130. If removal information is obtained after the network connection is restored, a downloading operation of the application software is canceled according to the removal information, and the locally cached download link is deleted.

For example, after the smart watch for kids is reconnected to the network, the smart watch for kids does not need to send the downloading request to the server again to obtain the download link. Instead, the smart watch for kids can download the installation package directly according to the locally cached download link and install the application software that is stopped being downloaded due to network interruption, so as to ensure the downloading and installation speed of the application software. However, there is a technical problem in this downloading processing method. If the application software that is stopped being downloaded in the smart watch for kids is removed by the server due to a defect in the process of waiting for the network connection, the smart watch for kids will still continue to download and install the application software according to the locally cached download link after the network connection is restored. However, an internal memory of the smart watch for kids has low capacity. Installation of the unusable removed application in the smart watch for kids will seriously waste the internal memory of the smart watch for kids and even affect the running speed of the smart watch for kids. Therefore, the application downloading processing method proposed in this embodiment aims to cancel the downloading operation of the application software if it is detected that the application software corresponding to the locally cached download link has been removed by the server, so as to avoid the smart watch for kids from continuing to download and install the removed application software.

The removal information includes removal push information and a list of removed applications. The removal push information is generated by the server according to currently removed application software, and the removal push information includes identifier information of corresponding removed application software. The list of removed applications is generated by the server according to all pieces of removed application software, and a removal category includes identifier information of all the pieces of removed application software. Removed application software can be determined according to the identifier information of the application software in the removal information. Exemplarily, the smart watch for kids can be connected to the server only after being connected to the network, and the server can push the removal information or the smart watch for kids can pull the removal information from the server. Therefore, after the smart watch for kids is connected to the network, the smart watch for kids receives the removal information sent by the server, obtains the identifier information in the removal information, determines the removed application software according to the identifier information, cancels the downloading operation of the application software, and deletes the locally cached download link.

It should be noted that the server will take time to push the removal information or a client will take time to pull the removal information, so that the smart watch for kids cannot receive the removal information immediately after the network connection is restored. Moreover, the removal information pushed by the server is generated after it is determined that the corresponding application software is removed. If the application software corresponding to the download link locally cached by the smart watch for kids is not removed, the smart watch for kids will not receive the removal information. Based on this, time when the smart watch for kids receives the removal information is uncertain. However, if the downloading operation for downloading the installation package on the basis of the locally cached download link is paused to wait for the removal information, the normal downloading and installation of the application software will be affected. After the network connection is restored, if the downloading operation for downloading the corresponding application software is immediately executed according to the locally cached download link, the smart watch for kids will have completed the installation of the removed application software before receiving the removal information. In this regard, in this embodiment, after the network connection is completed, the downloading operation of the application software is re-executed at a corresponding time node on the basis of preset waiting time. The waiting time can be understood as time required by the server to send the removal information to the smart watch for kids connected to the network. If the smart watch for kids has not received the removal information after waiting for this waiting time, it indicates that the server has not removed the application software that is currently downloaded by the smart watch for kids within the time period when the smart watch for kids is disconnected from the network, that is, the smart watch for kids can continue to execute the downloading operation. This avoids the influence of waiting for the removal information on the normal downloading and installation of the application software and also reduces the influence of network fluctuations on receiving of the removal information by the smart watch for kids.

In an embodiment, when the removal information is the list of removed applications, if the list of removed applications contains the application software, the downloading operation of the application software is canceled, and the corresponding download link is deleted from a local cache. Exemplarily, identifier information of various pieces of application software is extracted from the list of removed applications in sequence, and matching is performed on the identifier information and the identifier information of the application software currently downloaded by the smart watch for kids. If at least one piece of the identifier information in the list of removed applications is the same as the identifier information of the application software currently downloaded by the smart watch for kids, it indicates that the smart watch for kids is downloading the removed application software and needs to stop the downloading operation of the application software. If there is no identifier information in the list of removed applications that is the same as the identifier information of the application software currently downloaded by the smart watch for kids, it indicates that the smart watch for kids is not downloading the removed application software at the present. If at least one piece of the identifier information in the list of removed applications is the same as the identifier information of the application software currently downloaded by the smart watch for kids, it is determined that the currently downloaded application software is matched with the application software corresponding to the removal information; then it is determined that the application software that is being downloaded and has the same identifier information as the identifier information in the list of removed applications has been removed; and the downloading operation of the application software is canceled. If the identifier information of the application software that is being downloaded is not the same as the identifier information in the list of removed applications, the downloading operation is continued to be executed.

In this embodiment, the way used by the server to push the removal information is that the server can decide when to send the removal information to the smart watch for kids, but the smart watch for kids is not sure when to receive the removal information. Therefore, this way used by the server to push the removal information may spend too much time in an information transmission process, which may cause that the smart watch for kids has successfully installed the removed application software corresponding to the removal information. The list of removed applications is a set of the identifier information of all the removed application software, that is, any smart watch for kids can determine, on the basis of the list of removed applications, application software that the smart watch for kids is downloading. Therefore, the smart watch for kids can automatically pull the list of removed applications from the server after the network connection is restored to determine whether the list of removed applications contains the application software that is being downloaded. It ensures that the smart watch for kids can determine latest removed application software before installing the application software, which greatly avoids the smart watch for kids from installing the removed application software.

In an embodiment, when the removal information is the removal push information, the specific step that the downloading operation of the application software is canceled according to the removal push information, and the locally cached download link is deleted includes S1301-S1302:

S1301. Corresponding removed application software is determined according to the removal push information and is compared with the currently downloaded application software.

Exemplarily, after determining that a piece of application software has been removed, the server determines a downloading request corresponding to the application software according to identifier information in historically received downloading requests and the identifier information of the removed application software, and determines, according to the identity information in the downloading request, a smart watch for kids that sends the downloading request. It can be understand that only the smart watch for kids that sends the downloading request for the removed application software can receive a download link sent by the server, and download and install the removed application software. Therefore, the server only needs to push the removal push information of the removed application software to the smart watch for kids that sends the downloading request for the application software.

Further, after receiving the removal push information pushed by the server, the smart watch for kids obtains the identifier information from the removal push information and determines the corresponding removed application software according to the identifier information. After it is determined that the application software has been removed, the removal push information corresponding to the application software cannot be immediately received by the smart watch for kids, it is possible that the smart watch for kids has already completed the installation of the application software after receiving the removal push information, so that a user needs to manually uninstall the application software that has been installed or perform other imperative operations. Therefore, it is necessary to compare the removed application software corresponding to the removal push information with the application software currently downloaded by the smart watch for kids to determine whether the removed application software is the same as the application software currently downloaded by the smart watch for kids. If the removed application software and the application software currently downloaded by the smart watch for kids are the same, it indicates that the application software needs to be stopped. If the removed application software and the application software currently downloaded by the smart watch for kids are different, it indicates that the smart watch for kids is not downloading the removed application software at present and will continue to download the application software. It should be noted that the application software currently downloaded by the smart watch for kids refers to the application software downloaded through the locally cached download link.

S1302. When it is determined that the currently downloaded application software is the same as the application software corresponding to the removal information, the downloading operation of the application software is canceled, and the corresponding download link is deleted from the local cache.

The downloading operation refers to an operation performed by the smart watch for kids for downloading and installing the installation package of corresponding application software according to the locally cached download link. After it is determined that the currently downloaded application software has been removed, regardless of whether the smart watch for kids is downloading the installation package or installing the application software, the downloading operation of the application software is stopped, so as to prevent the smart watch for kids from installing the removed application software. It should be noted that the smart watch for kids may download a plurality of pieces of application software through a plurality of locally cached download links. When it is determined that the removed application software corresponding to the removal information is the same as one of the currently downloaded application software, the downloading operation of the application software is canceled, and the downloading operations of other application software are executed normally.

It should be noted that if the network connection does not fail in the process that the smart watch for kids downloads the installation package, the smart watch for kids downloads the installation package from the download link sent by the server. At this time, if the server removes the application software corresponding to the installation package, the server will automatically delete the download link, so that the smart watch for kids can cancel the downloading operation of the application software.

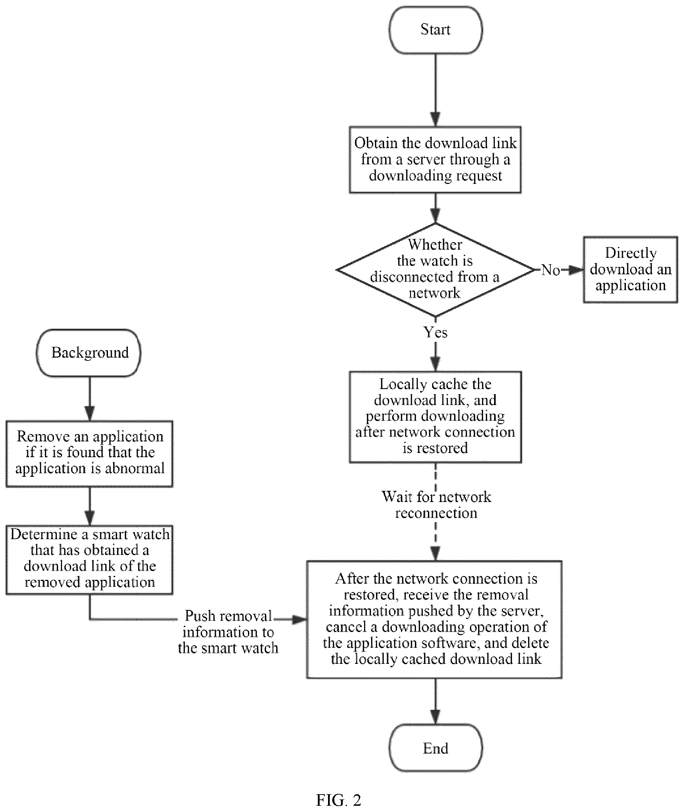

In an embodiment, FIG. 2 is a block flowchart of an application downloading processing method according to an embodiment of the present disclosure. As shown in FIG. 2, the application downloading processing method is applied to a server and a smart watch for kids. Exemplarily, the smart watch for kids sends a downloading request for application software to be downloaded to the server, and the server sends a download link of the application software to the smart watch for kids according to the downloading request. The smart watch for kids downloads an installation package of the application software according to the download link. If the smart watch for kids maintains a normal network connection in the downloading process, the smart watch for kids directly downloads and installs the application software. If the smart watch for kids has a network disconnection in the downloading process, the smart watch for kids locally caches the download link. After the smart watch for kids restores the network connection, the smart watch for kids continues the downloading according to the locally cached download link. If the server detects an abnormality in the application software when the smart watch for kids waits for network reconnection, the server removes the application software and generates removal information of the application software. The server determines, according to the downloading request, the smart watch for kids that has obtained the download link of the application software, that is, determines the smart watch for kids that may be downloading the application software, and pushes the removal information to the smart watch for kids. After the smart watch for kids is connected to the network, the smart watch for kids receives the removal information pushed by the server, cancels the downloading operation of the application software according to the removal information, and deletes the locally cached download link.

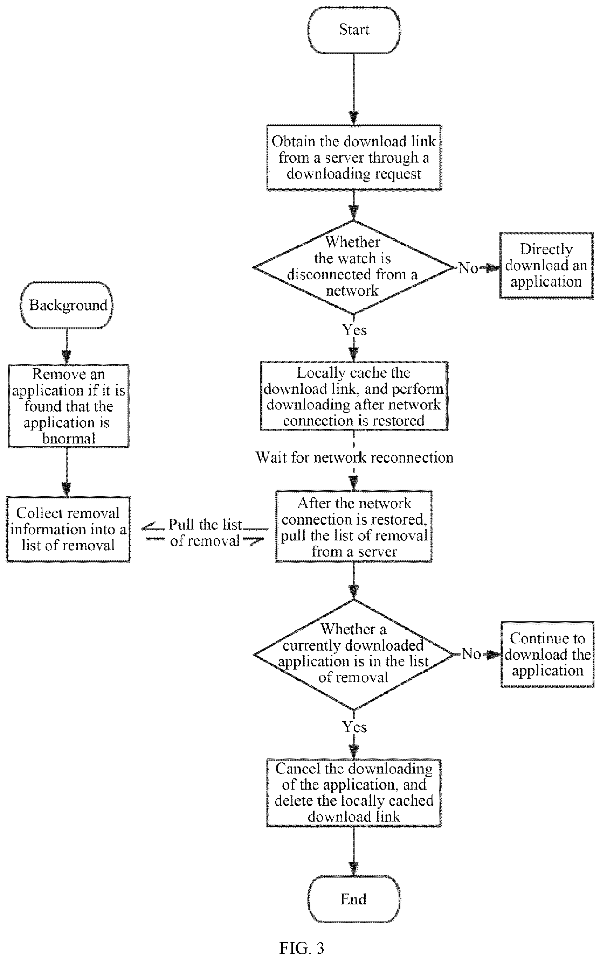

In an embodiment, FIG. 3 is a block flowchart of another application downloading processing method according to an embodiment of the present disclosure. As shown in FIG. 3, the application downloading processing method is applied to a server and a smart watch for kids. Exemplarily, the smart watch for kids sends a downloading request for application software to be downloaded to the server, and the server sends a download link of the application software to the smart watch for kids according to the downloading request. The smart watch for kids downloads an installation package of the application software according to the download link. If the smart watch for kids maintains a normal network connection in the downloading process, the smart watch for kids directly downloads and installs the application software. If the smart watch for kids has a network disconnection in the downloading process, the smart watch for kids locally caches the download link. After the smart watch for kids restores the network connection, the smart watch for kids continues the downloading according to the locally cached download link. If the server detects an abnormality in the application software when the smart watch for kids waits for network reconnection, the server removes the application software and generates removal information of the application software. The server collects the removal information into a list of removed applications that records all historical removed application software, and waits for the smart watch for kids to automatically pull the list of removed applications. The smart watch for kids automatically pulls the list of removed applications from the server after the network connection is restored, and obtains all removal information from the list of removed applications. Whether the application software currently downloaded by the smart watch for kids is contained in the list of removed applications is determined according to the removal information. If the application software is not contained in the list of removed applications, the application software is continued to be downloaded. If the application software is contained in the list of removed applications, the downloading operation of the application software is canceled, and the locally cached download link is deleted.

In summary, the application downloading processing method provided in this embodiment involves: obtaining a download link of application software, wherein the download link is used for downloading an installation package of the application software; if network disconnection occurs before the downloading of the installation package is completed, locally caching the download link, and waiting for network reconnection; and of removal information is obtained after network connection is restored, canceling the downloading operation of the application software according to the removal information, and deleting the locally cached download link. Through the above technical means, after it is detected that the application software downloaded through the locally cached download link has been removed, the downloading operation of the application software is stopped, and the locally cached download link is deleted to prevent the installation of the removed application software. This solves the problem of waste of an internal memory caused by the fact that the smart watch for kids downloads and installs, through the locally cached download link after the network connection is restored, a removed application that cannot be run normally.

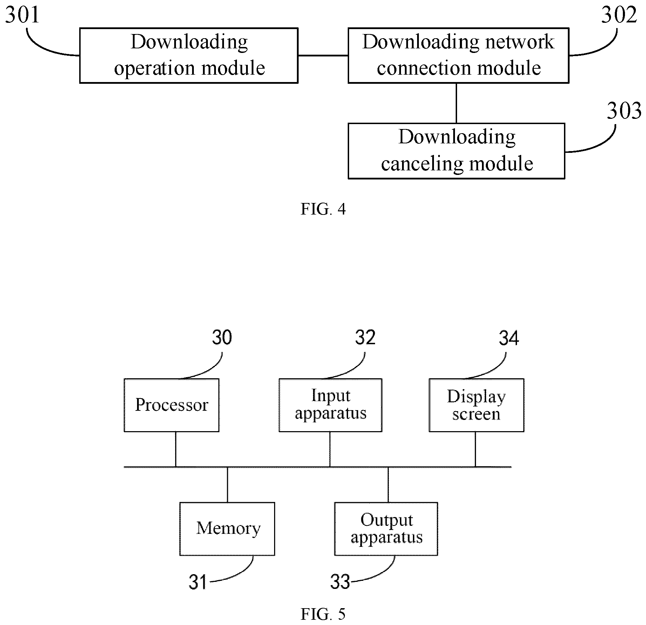

FIG. 4 is a schematic structural diagram of an application downloading processing apparatus according to an embodiment of the present disclosure. Referring to FIG. 4, the application downloading processing apparatus includes: a downloading operation module 301, a downloading network connection module 302, and a downloading canceling module 303.

The downloading operation module is configured to obtain a download link of application software, wherein the download link is used for downloading an installation package of the application software; the downloading network connection module is configured to: if network disconnection occurs before the downloading of the installation package is completed, cache the download link locally, and wait for network reconnection; and the downloading canceling module is configured to: if removal information is obtained after the network connection is restored, cancel a downloading operation of the application software according to the removal information, and delete the locally cached download link.

Based on the above embodiments, the removal information includes a list of removed applications; and the downloading canceling module, configured to: cancel a downloading operation of the application software according to the removal information, and delete the locally cached download, includes: a first canceling unit, configured to: if the list of removed applications contains the application software, cancel the downloading operation of the application software, and delete the corresponding download link from a local cache.

Based on the above embodiments, the removal information includes removal push information.

Based on the above embodiments, the application downloading processing apparatus further includes: a waiting unit, configured to: after the network connection is completed, re-execute the downloading operation of the application software at a corresponding time node on the basis of preset waiting time.

In summary, the application downloading processing apparatus provided in this embodiment involves: obtaining a download link of application software, wherein the download link is used for downloading an installation package of the application software; if network disconnection occurs before the downloading of the installation package is completed, locally caching the download link, and waiting for network reconnection; and of removal information is obtained after network connection is restored, canceling the downloading operation of the application software according to the removal information, and deleting the locally cached download link. Through the above technical means, after it is detected that the application software downloaded through the locally cached download link has been removed, the downloading operation of the application software is stopped, and the locally cached download link is deleted to prevent the installation of the removed application software. This solves the problem of waste of an internal memory caused by the fact that the smart watch for kids downloads and installs, through the locally cached download link after the network connection is restored, a removed application that cannot be run normally.

It is worth meaning that in the above embodiments of the application downloading processing apparatus, various units and modules included are only divided according to a function logic, but are not limited to the above division, as long as corresponding functions are achieved. In addition, the specific names of the various function units are merely for convenience of distinguishing from each other, and are not intended to limit the protection scope of the present disclosure.

The application downloading processing apparatus provided by the embodiments of the present disclosure is included in an application downloading processing device, can be configured to perform the application downloading processing method provided in any embodiment described above, and have corresponding functions and beneficial effects.

FIG. 5 is a schematic structural diagram of an application downloading processing device according to an embodiment of the present disclosure. As shown in FIG. 5, the application downloading processing device includes a processor 30, a memory 31, an input device 32, an output device 33, and a display screen 34. There may be one or more processors 30. One processor 30 is taken as an example in FIG. 5. There may be one or more display screens 34. One display screen 34 is taken as an example in FIG. 5. The processor 30, the memory 31, the input device 32, the output device 33, and the display screen 34 can be connected through a bus or in another way. Bus connection is taken as an example in FIG. 5.

The memory 31, as a computer-readable storage medium, can be configured to store software programs, computer-executable programs, and modules, such as program instructions/modules corresponding to the application downloading processing method in the embodiments of the present disclosure (such as the downloading operation module 301, the downloading network connection module 302, and the downloading canceling module 303 in the application downloading processing apparatus). The processor 30 runs the software programs, instructions, and modules stored in the memory 31, so as to implement various functional applications and data processing of the application downloading processing device, that is, to implement the application downloading processing method described above.

The memory 31 may mainly include a program storage region and a data storage region. The program storage region may store an operating system and an application program required by at least one function. The data storage region may store data created according to use of the application downloading processing device. In addition, the memory 31 may include a high speed random access memory, and may further include a non-volatile memory, such as at least one magnetic disk storage device, a flash memory, or another non-volatile solid storage device. In some instances, the memory 31 can further include a memory remotely located with respect to the processor 30. These remote memories can be connected to the application downloading processing device through a network. Examples of the above network include, but are not limited to, Internets, intranets, local area networks, mobile communication networks, and combinations thereof.

The input apparatus 32 may be configured to receive input numeric or character information and generate key signal inputs related to user settings and function control of the application downloading processing device. The output apparatus 33 may include a speaker and another audio output device.

The application downloading processing device includes the application downloading processing apparatus, and can be configured to perform any application downloading processing method, and has corresponding functions and beneficial effects.

The embodiments of the present disclosure further provide a storage medium that includes computer-executable instructions. The computer-executable instructions, when executed by a computer processor, are used for performing an application downloading processing method. The application downloading processing method includes: obtaining a download link of application software, wherein the download link is used for downloading an installation package of the application software; if network disconnection occurs before the downloading of the installation package is completed, locally caching the download link, and waiting for network reconnection; and of removal information is obtained after network connection is restored, canceling the downloading operation of the application software according to the removal information, and deleting the locally cached download link.

The storage medium is any of various types of memory devices or storage devices. The term "storage medium" aims to include: an installation medium, such as a CD-ROM, a floppy disk, or a magnetic tape device; a computer system memory or random access memory, such as a DRAM, a DDR RAM, an SRAM, an EDO RAM, and a Rambus RAM; a non-volatile memory, such as a flash memory, a magnetic medium (such as a hard disk drive or an optical storage); a register; other similar types of memory elements; or the like. The storage medium may also include other types of memories or their combinations. In addition, the storage medium can be located in a first computer system in which a program is executed, or can be located in a different second computer system. The second computer is connected to the first computer system through a network (such as an Internet). The second computer system can provide program instructions to the first computer for execution. The term "storage medium" may include two or more storage media residing in different positions (such as in different computer systems connected through a network). The storage medium can store program instructions (for example, specifically implemented as computer programs) that can be executed by one or more processors.

Of course, according to the storage medium including the computer-executable instructions in the embodiments of the present disclosure, the computer-executable instructions are not limited to performing the above application downloading processing method, and can also perform the related operations in the application downloading processing method provided by any embodiment of the present disclosure.

The application downloading processing method, apparatus, and device, and the storage medium provided in the above embodiments can perform the application downloading processing method provided in any embodiment of the present disclosure. For technical details not described in detail in the above embodiments, refer to the application downloading processing method provided in any embodiment of the present disclosure.

The above description is only for explaining the preferred embodiments of the present disclosure and technical principles used in the embodiments. The present disclosure is not limited to the specific embodiments here, and various significant changes, readjustments, and substitutions that can be made by those skilled in the art will not depart from the protection scope of the present disclosure. Therefore, although the above embodiments have provided a more detailed explanation of the present disclosure, the present disclosure is not limited to the above embodiments. Without departing from the concept of the present disclosure, more equivalent embodiments can also be included, and the scope of the present disclosure depends on the scope of the claims.

## Claims

1. An application downloading processing method, **characterized by**:
obtaining a download link of application software, wherein the download link is used for downloading an installation package of the application software;
if network disconnection occurs before the downloading of the installation package is completed, caching the download link locally, and waiting for network reconnection; and
if removal information is obtained after the network connection is restored, canceling a downloading operation of the application software according to the removal information, and deleting the locally cached download link.

2. The method according to claim 1, wherein the removal information comprises a list of removed applications; and
the canceling a downloading operation of the application software according to the removal information, and deleting the locally cached download comprises:
if the list of removed applications contains the application software, canceling the downloading operation of the application software, and deleting the corresponding download link from a local cache.

3. The method according to claim 1, wherein the removal information comprises removal push information of the application software.

4. The method according to claim 1, wherein the application download processing method further comprises:
after the network connection is completed, re-executing the downloading operation of the application software at a corresponding time node on the basis of preset waiting time.

5. An application downloading processing apparatus, **characterized by**:
a downloading operation module, configured to obtain a download link of application software, wherein the download link is used for downloading an installation package of the application software;
a downloading network connection module, configured to: if network disconnection occurs before the downloading of the installation package is completed, cache the download link locally, and wait for network reconnection; and
a downloading canceling module, configured to: if removal information is obtained after the network connection is restored, cancel a downloading operation of the application software according to the removal information, and delete the locally cached download link.

6. The apparatus according to claim 5, wherein the removal information comprises a list of removed applications; and
the downloading canceling module, configured to: cancel a downloading operation of the application software according to the removal information, and delete the locally cached download, comprises:
a first canceling unit, configured to: if the list of removed applications contains the application software, cancel the downloading operation of the application software, and delete the corresponding download link from a local cache.

7. The apparatus according to claim 5, wherein the removal information comprises removal push information.

8. The apparatus according to claim 5, wherein the application download processing apparatus further comprises:
a waiting unit, configured to: after the network connection is completed, re-execute the downloading operation of the application software at a corresponding time node on the basis of preset waiting time.

9. An application downloading processing device, comprising:
one or more processors; and
a memory, configured to store one or more programs,
wherein the one or more programs, when executed by the one or more processors, cause the one or more processors to implement the application downloading processing method according to any one of claims 1 to 4.

10. A computer-readable storage medium, storing a computer program, wherein the program, when executed by a processor, implements the application downloading processing method according to any one of claims 1 to 4.
